# EUROPÄISCHE PATENTSCHRIFT

(11) **EP 3 074 277 B1**
(45) Veröffentlichungstag und Bekanntmachung des Hinweises auf die Patenterteilung: **21.03.2018**
(21) Anmeldenummer: 14799702.7
(22) Anmeldetag: 07.11.2014
(51) Int. Cl.: B60Q 5/00, G10K 11/00, G06F 17/40

(54) **FAHRZEUG MIT EINER VORRICHTUNG UND VERFAHREN ZUR BESCHALLUNG EINES INNENRAUMS DES FAHRZEUGS**
VEHICLE COMPRISING A DEVICE AND A METHOD FOR EXPOSING AN INTERIOR OF SAID VEHICLE TO SOUND
VÉHICULE ÉQUIPÉ D'UN APPAREIL ET PROCÉDÉ DE SONORISATION D'UN ESPACE INTÉRIEUR DU VÉHICULE

(30) Priorität: 26.11.2013 DE 102013224131
(43) Veröffentlichungstag der Anmeldung: 05.10.2016
(73) Patentinhaber: Volkswagen Aktiengesellschaft, 38436 Wolfsburg (DE)
(72) Erfinder: CENGIL, Sükrü, 30938 Burgwedel (DE)
(86) Internationale Anmeldenummer: PCT/EP2014/073990
(87) Internationale Veröffentlichungsnummer: WO 2015/078680

(56) Entgegenhaltungen:
- US-A1- 2002 151 997
- US-A1- 2013 121 515
- US-A1- 2013 259 238
- US-B1- 8 422 693

## Beschreibung

Die vorliegende Erfindung liegt auf dem Gebiet der Beschallung eines Innenraums eines Fahrzeugs.

In vielen Bereichen der Technik kommen Lautsprecher zum Einsatz, die neben konventionellen Lautstärkereglern auch durch andere Einflüsse steuerbar sind. Beispielsweise können Lautsprechern Bereiche vorgegeben werden, auf die ein Lautsprecherton gerichtet werden soll, und in diesem Bereich ein Tonsignal durch konstruktive Überlagerung mehrerer Einzelsignale eine Intensität des Signals erhöht werden. Zudem können Abstrahlrichtung oder Intensität eines emittierten Tonsignals, beispielsweise im Unterhaltungsbereich, durch eine Position einer Person steuerbar sein. Die Druckschrift US2013/0121515A1 offenbart eine Vorrichtung mit Lautsprechern, die mittels Gesichtserkennung eine Kopfbewegung einer Person verfolgt, und nahe der Ohren der Person Bereiche mit vergleichsweise hoher Intensität des Tonsignals erzeugt. Auch können gemäß anderer konventionellen Lösungen durch konstruktive und destruktive Überlagerung von Tonsignalen Bereiche derart geschaffen werden, dass mehrere Personen mit unterschiedlichen Tonsignalen beschallt werden können. Jedoch ist bei diesen Lösungen ein intensiv beschallter Bereich ausschließlich direkt auf eine Person ausgerichtet, und von dieser nur begrenzt steuerbar. Auch kann z.B. eine indirekte Beschallung, beispielsweise wenn ein Passagier Hintergrundmusik gleichzeitig zu einer Information eines Navigationssystems im Vordergrund hören möchte, nur mit komplizierten Methoden erreicht werden. Dies wiederum kann den Fahrkomfort unter Umständen vermindern. Ferner sind eine Anzahl oder Kombinationsmöglichkeiten zur Verfügung stehender Schallquellen bei konventionellen Lösungen eingeschränkt.

Druckschrift US 2013/0259238 A1 schlägt eine gestenresponsive Modifikation eines erzeugten Schallfelds vor. Jedoch ist auch der Druckschrift US 2013/0259238 keine Lösung für eine verbesserte Beschallung eines Fahrzeuginnenraums zu entnehmen.

Es besteht daher ein Bedarf daran, ein verbessertes Konzept zur Beschallung eines Innenraums eines Fahrzeugs zu schaffen.

Diesem Bedarf tragen eine Vorrichtung, ein Verfahren und ein Computerprogramm mit den Merkmalen der unabhängigen Patentansprüche Rechnung. Weitere vorteilhafte Ausführungsformen und Weiterbildungen sind Gegenstand der abhängigen Patentansprüche. Gemäß einem ersten Aspekt beziehen sich Ausführungsbeispiele der vorliegenden Erfindung auf ein Fahrzeug mit einer Vorrichtung zur Beschallung eines Innenraums des Fahrzeugs. Die Vorrichtung umfasst eine Sensoreinrichtung. Die Sensoreinrichtung ist dazu ausgebildet, eine Geste eines Benutzers zu erfassen und ein die Geste charakterisierendes Signal bereitzustellen. Die Vorrichtung umfasst außerdem eine Lautsprecheranordnung mit zumindest einem Lautsprecher. Die Lautsprecheranordnung ist dazu ausgebildet, abhängig von dem Signal eine Charakteristik eines von dem Lautsprecher emittierten Audiosignals zu verändern. Es können somit Möglichkeiten geschaffen werden, eine Lautsprecheranlage intuitiv und berührungsfrei zu steuern, oder die Beschallung interaktiv auf die Bedürfnisse von Fahrzeuginsassen anzupassen. Die Charakteristik ist dabei eine Raumrichtung, in die ein Maximum einer Intensität des Audiosignal emittiert wird. Verschiedene Bedürfnisse der Fahrzeuginsassen können somit gleichzeitig berücksichtigt werden. Wünscht beispielsweise ein Passagier des Fahrzeugs eine geringere Lautstärke als ein anderer, kann eine Einstellung erfolgen, bei der eine Umgebung eines Passagiers stärker beschallt wird als eine Umgebung eines anderen Passagiers. Dabei ist der Lautsprecher ausgebildet, um ansprechend auf das Signal eine räumliche Ausrichtung des Lautsprechers zu verändern. Hierdurch kann eine Veränderung eines zu beschallenden Raumbereichs einfach bewirkt werden.

Bei einigen Ausführungsbeispielen umfasst die Vorrichtung einen Prozessor. Der Prozessor ist dazu ausgebildet, das Signal zu empfangen. Außerdem ist der Prozessor dazu ausgebildet, basierend auf dem Signal ein Steuersignal mit Informationen zum Verändern der Charakteristik des von der Lautsprecheranordnung emittierten Audiosignals an die Lautsprecheranlage bereitzustellen. Somit kann zwischen verschiedenen Bewegungsmustern unterschieden werden, und eine entsprechende Veränderung bei der Beschallung des Fahrzeuginnenraums erfolgen.

Bei manchen Ausführungsbeispielen ist die Charakteristik zumindest eine Eigenschaft der Eigenschaften Lautstärke und Phasenlage des Audiosignals. Dadurch können Möglichkeiten geschaffen werden, beispielsweise mittels kontrollierter Überlagerung mehrerer Audiosignale mehrere Raumbereiche zu schaffen, in denen z.B. ein Lied oder Radioprogramm unterschiedlich laut wahrgenommen wird, oder um die Lautstärke universell für alle Passagiere zu regeln. Auch können ggf. Bässe oder Höhen individuell angepasst werden.

Bei einigen Ausführungsbeispielen wird der Lautsprecher in Folge eines Aktivierens des Lautsprechers mittels einer Beleuchtung hervorgehoben. Lautsprecher, die zu einem bestimmten Zeitpunkt das Audiosignal wiedergeben, können somit von einem Benutzer auf den ersten Blick erkannt werden.

Bei manchen Ausführungsbeispielen ist die Lautsprecheranordnung in einem Armaturenbrett des Fahrzeugs angeordnet. Durch eine Positionierung am Armaturenbrett kann die Bedienung erleichtert werden.

Bei einigen Ausführungsbeispielen charakterisiert das Signal eine Handbewegung des Benutzers. Dadurch kann eine Vielzahl an Eingabeoptionen, beispielsweise Annäherung oder Entfernung einer Hand, Wisch- oder Ziehbewegungen oder Zweihandgesten, zur Verfügung gestellt werden.

Bei manchen Ausführungsbeispielen wird die Charakteristik des Audiosignals derart verändert, dass ein durch die Handbewegung des Benutzers vorgegebener Bereich von dem Lautsprecher beschallt wird. Damit kann eine Möglichkeit der interaktiven Bedienung des Lautsprechers durch den Benutzer geschaffen werden. Zu beschallende Bereiche können so individuell ausgewählt werden, oder ggf. von einem Insassen zu einem anderen Insassen verschoben werden.

Bei einigen Ausführungsbeispielen umfasst die Vorrichtung eine Mehrzahl von Lautsprechern. Dies kann eine Vielfalt an weiteren Akustikszenarien eröffnen, wie z.B. einen räumlichen Übergang von hoher zu geringer Lautstärke, Stereo, oder eine Konzentration des Audiosignals mehrerer Lautsprecher auf einen gemeinsamen Punkt oder Raumbereich. Auch können ggf. räumliche Eindrücke wie z.B. Bewegungen einer Schallquelle von links nach rechts erzeugt werden.

Bei manchen Ausführungsbeispielen wird die Charakteristik derart verändert, dass von einer ersten Teilmenge der Mehrzahl von Lautsprechern ein durch die Handbewegung des Benutzers vorgegebener Bereich beschallt wird. Ergänzend oder alternativ wird von einer zweiten Teilmenge der Mehrzahl von Lautsprechern ein durch die Handbewegung des Benutzers vorgegebener weiterer Bereich beschallt. Ein beschallter Bereich kann somit z.B. in mehrere Bereiche aufgeteilt werden. Ferner können diese Bereiche ggf., auch unabhängig voneinander, von verschiedenen Insassen des Fahrzeugs weiter angepasst werden, beispielsweise durch Auswahl verschiedener Bass- oder Höhenanteile oder Lautstärken.

Bei einigen Ausführungsbeispielen ist die erste Teilmenge von Lautsprechern einer ersten Anordnung einander benachbarter Lautsprecher zugeordnet. Außerdem ist die zweite Teilmenge von Lautsprechern einer zweiten Anordnung einander benachbarter Lautsprecher zugeordnet. So kann z.B. die erste Anordnung einen vorderen Bereich, und die zweite Anordnung einen hinteren Bereich des Fahrzeuginnenraums optimal beschallen.

Zudem beziehen sich Ausführungsbeispiele auf ein Verfahren zur Beschallung eines Innenraums eines Fahrzeugs. Das Verfahren umfasst ein Erfassen einer Geste eines Benutzers durch eine Sensoreinrichtung. Weiterhin umfasst das Verfahren ein Bereitstellen eines die Geste charakterisierenden Signals. Zudem umfasst das Verfahren ein Verändern einer Charakteristik eines von einer zumindest einen Lautsprecher umfassenden Lautsprecheranordnung emittierten Audiosignals abhängig von dem Signal. Die Charakteristik ist dabei eine Raumrichtung, in die ein Maximum einer Intensität des Audiosignal emittiert wird. Das Verändern der Charakteristik umfasst ein Verändern einer räumlichen Ausrichtung des Lautsprechers ansprechend auf das Signal. Eine berührungsfreie oder interaktive Steuerung der Beschallung kann somit realisiert werden. Auch kann unter Umständen eine Vielzahl verschiedener Tonszenarien oder individueller Lautstärken durch entsprechend vielfältige Eingabemöglichkeiten bereitgestellt werden.

Darüber hinaus schaffen weitere Ausführungsbeispiele auch ein Programm oder Computerprogramm mit einem Programmcode zum Durchführen des folgenden Verfahrens, wenn der Programmcode auf einem Computer, einem Prozessor oder einer programmierbaren Hardwarekomponente, wie z.B. einer applikationsspezifischen integrierten Schaltung (ASIC), ausgeführt wird. Das Verfahren umfasst ein Empfangen eines eine Geste eines Benutzers charakterisierenden Signals. Das Verfahren umfasst zudem ein Bereitstellen eines Steuersignals basierend auf dem Signal, welches das Verändern einer Charakteristik eines von einer zumindest einen Lautsprecher umfassenden Lautsprecheranordnung emittierten Audiosignals in einem Fahrzeug bewirkt. Die Charakteristik ist dabei eine Raumrichtung, in die ein Maximum einer Intensität des Audiosignal emittiert wird. Das Steuersignal bewirkt ein Verändern einer räumlichen Ausrichtung des Lautsprechers.

Nachfolgend werden unter Bezugnahme auf die beigefügten Figuren einige exemplarische Ausführungsbeispiele näher beschrieben und erläutert. Es zeigen im Einzelnen:
- Fig. 1: eine schematische Darstellung eines Fahrzeugs mit einer Vorrichtung zur Beschallung eines Innenraums eines Fahrzeugs gemäß einem Ausführungsbeispiel;
- Fig. 2: mehrere Lautsprecher gemäß einem Ausführungsbeispiel;
- Fig. 3: eine Illustration einer Anordnung verstellbar gelagerter Lautsprecher zur Beschallung eines Innenraums eines Fahrzeugs gemäß einem Ausführungsbeispiel;
- Fig. 4: eine Illustration einer Anordnung einer Mehrzahl von Lautsprechern in einem Innenraum eines Fahrzeugs gemäß einem Ausführungsbeispiel;
- Fign. 5a und 5b: eine Anordnung von einzelnen, durch Beleuchtung hervorhebbaren Lautsprechern gemäß einem Ausführungsbeispiel;
- Fig. 6: ein Flussdiagramm zum Ablauf eines Verfahrens zur Beschallung eines Innenraums eines Fahrzeugs gemäß einem Ausführungsbeispiel; und
- Fig. 7: ein Flussdiagramm zum Ablauf eines Programmes zur Beschallung eines Innenraums eines Fahrzeugs gemäß einem Ausführungsbeispiel.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "gekoppelt" bezeichnet wird, mit dem anderen Element direkt verbunden oder gekoppelt sein kann oder dass dazwischenliegende Elemente vorhanden sein können. Wenn ein Element dagegen als "direkt verbunden" oder "direkt gekoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines" und "der", "die", "das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist" und/oder "aufweisend", "umfasst" und/oder "umfassend" wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

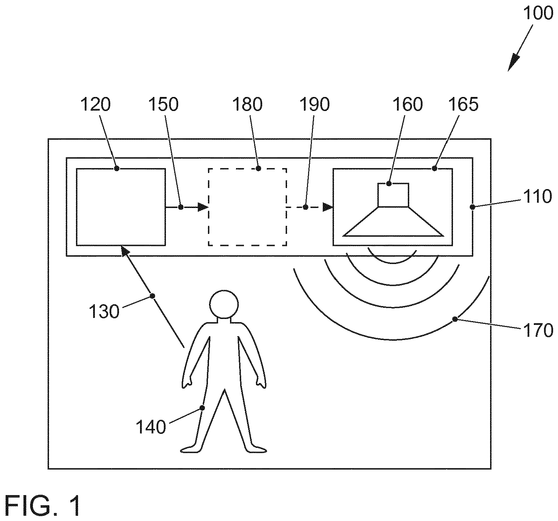

Fig. 1 zeigt in schematischer Darstellung ein Fahrzeug 100 mit einer Vorrichtung 110 zur Beschallung eines Innenraums des Fahrzeugs 100. Die Vorrichtung 110 umfasst eine Sensoreinrichtung 120. Die Sensoreinrichtung 120 ist dazu ausgebildet, eine Bewegung 130 eines Benutzers 140 zu erfassen und ein die Bewegung 130 charakterisierendes Bewegungssignal 150 bereitzustellen. Die Vorrichtung 110 umfasst zudem eine Lautsprecheranordnung 165, die zumindest einen Lautsprecher 160 umfasst. Die Lautsprecheranordnung 165 ist dazu ausgebildet, abhängig von dem Bewegungssignal 130 zumindest eine Charakteristik eines von der Lautsprecheranordnung 165 emittierten Audiosignals 170 zu verändern.

Das Fahrzeug 100 kann ein Kraftfahrzeug (KFZ) sein, beispielsweise ein Personen- (Pkw) oder Lastkraftwagen (Lkw). Ferner kann es sich bei dem Fahrzeug 100 neben weiteren Landfahrzeugen auch um ein Luft- oder Wasserfahrzeug handeln.

Die Sensoreinrichtung 120 kann beispielsweise ein Ultraschallsensor sein, aber auch einen optischen Sensor umfassen. Der optische Sensor kann dabei ein Infrarot- (IR), Wärme- oder Ultraviolettsensor (UV) sein, aber auch z.B. eine Kamera zum Empfang von Licht im visuellen Wellenlängenbereich. Bei einigen Ausführungsbeispielen empfängt die Sensoreinrichtung 120 eine Reflexion eines Signals, welches zuvor von einem optional vorhandenen Sender emittiert wurde, der dazu ausgebildet ist, das Signal zu erzeugen. Dies kann z.B. bei Verwendung von Ultraschall gegeben sein.

Die Charakteristik des von der Lautsprecheranordnung 165 oder dem Lautsprecher 160 emittierten Audiosignals 170 umfasst bei einigen Ausführungsbeispielen eine Abstrahlrichtung. Der Lautsprecher 160 kann hierzu beispielsweise schwenkbar gelagert sein. Anders ausgedrückt kann beispielsweise die Charakteristik eine räumliche Ausrichtung des Lautsprechers 160 umfassen. Der Lautsprecher 160 kann dazu z.B. mithilfe eines Servomotors oder Aktuators ausrichtbar sein. Die Charakteristik umfasst außerdem bei manchen Ausführungsbeispielen eine Phasenlage. Auch kann die Charakteristik, z.B. bei Überlagerung mehrerer zueinander phasenverschobener Audiosignale wenigstens teilweise durch eine Zusammensetzung von Wellenanteilen mit vorbestimmten Phasenlagen in einem vorbestimmten Mischverhältnis gegeben sein. Hierdurch kann die Möglichkeit geschaffen werden, Audiosignale an bestimmten Punkten konstruktiv oder destruktiv zu überlagern, was bei einem Benutzer einen Eindruck höherer oder niedriger Lautstärke des Audiosignals, oder Teilen des Audiosignals, erzeugen kann. Bei einigen Ausführungsbeispielen umfasst die Charakteristik des von der Lautsprecheranordnung 165 emittierten Audiosignals 170 eine Intensität. Die Intensität kann in Extremfällen durch eine volle Leistung des Lautsprechers 160 gegeben sein, oder den Wert Null annehmen. Anders ausgedrückt umfasst die Intensität in einem Ausführungsbeispiel die Zustände "aktiviert" und "deaktiviert" des Lautsprechers 160.

Es ist ferner möglich, optionale Komponenten gemäß weiteren Ausführungsbeispielen zu implementieren. Optionale Komponenten sind in Fig. 1 anhand von gestrichelten Linien dargestellt.

Bei manchen Ausführungsbeispielen umfasst die Vorrichtung 110, wie in Fig. 1 gezeigt, einen optionalen Prozessor 180. Der Prozessor 180 empfängt das Signal 150 von der Sensoreinrichtung 120, und erzeugt auf dem Signal 150 basierend ein Steuersignal 190. Das Steuersignal 190 umfasst dabei Informationen zum Verändern einer Charakteristik des von der Lautsprecheranordnung 165 emittierten Audiosignals 170.

Bei einigen Ausführungsbeispielen ist eine Mehrzahl von Lautsprechern von der Vorrichtung umfasst. Im Folgenden werden nun einige Varianten für eine mögliche Ansteuerung der Mehrzahl von Lautsprechern über Gesten beschrieben, durch die ein Richten oder Bündeln der von den Lautsprechern emittierten Audiosignale erfolgen kann. Bei diesen Varianten kann es auch möglich sein, einen Abstrahlbereich des Audiosignals räumlich zu verschieben, oder auch zu steuern, auf welchem Teilbereich einer von der Mehrzahl von Lautsprechern gebildeten Fläche ein Audiosignal wiedergegeben werden soll. Die Varianten können alternativ, oder bei weiteren Ausführungsbeispielen auch in Kombination miteinander eingesetzt werden.

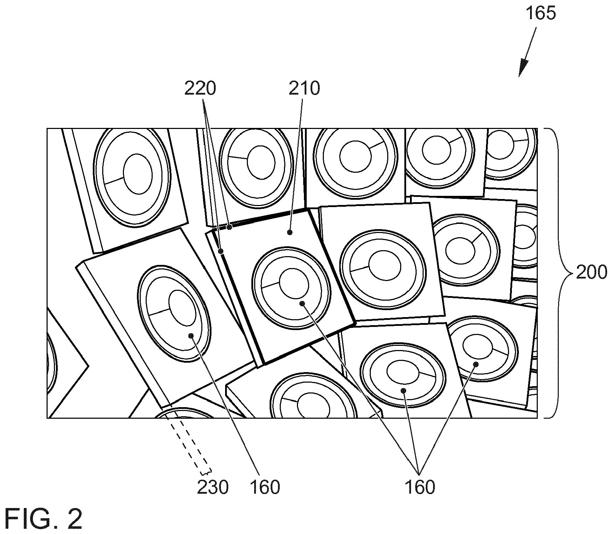

In Fig. 2 umfasst die Lautsprecheranordnung 165 eine Mehrzahl von Lautsprechern 200, die zueinander benachbart angeordnet sind. Die Mehrzahl von Lautsprechern 200 wird im Folgenden aufgrund der gezeigten Anordnung auch als Lautsprechermatrix 200 bezeichnet. Benachbart sind zwei Objekte, zwischen denen kein weiteres Objekt desselben Typs angeordnet ist. Unmittelbar benachbart sind entsprechende Objekte, wenn sie aneinandergrenzen, also beispielsweise miteinander in Kontakt stehen. Die einzelnen Lautsprecher 160 aus der Matrix 200 sind im Wesentlichen identisch zueinander ausgeführt. Ein Lautsprecher 160 weist eine Stirnseite 210 mit quadratischem Grundriss auf, über die das Audiosignal abgestrahlt wird. Eine Seitenlänge 220 der Stirnseite 210 ist zudem um etwa ein Zehnfaches größer als eine Dicke 230 des Lautsprechers 160. Die einzelnen Lautsprecher 160 sind ferner schwenkbar gelagert, und in Fig. 2 zueinander gedreht. Mit anderen Worten sind deren Stirnseiten 210 nicht parallel zueinander ausgerichtet, sondern auf einen, z.B. durch eine Geste eines Benutzers, vorgegebenen Punkt gerichtet.

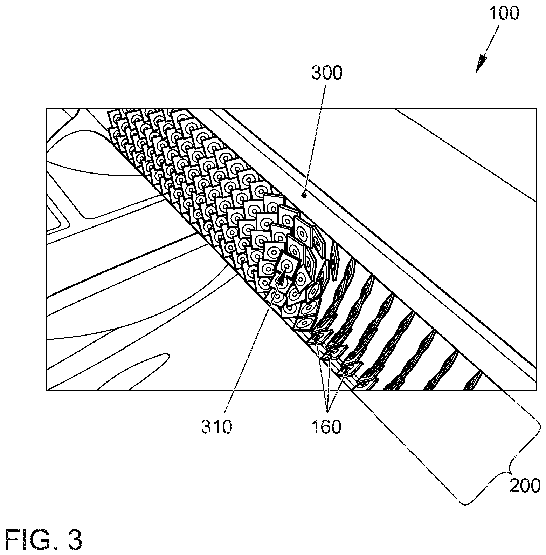

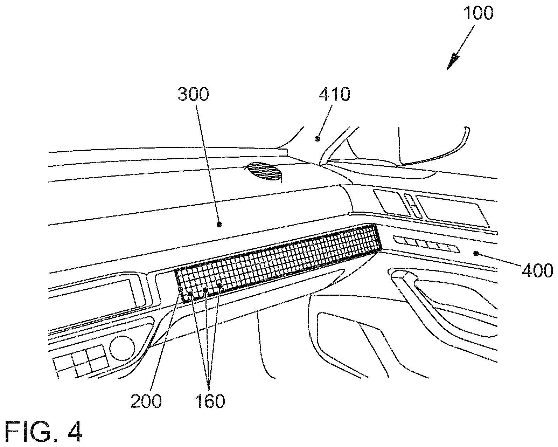

Durch die in Fig. 2 beschriebene Bauform kann ein Anbringen der einzelnen Lautsprecher 160 auf geringem Bauraum oder in Form einer Matrix aus zueinander benachbarten Lautsprechern 160 begünstigt werden. Die Mehrzahl von Lautsprechern 200 ist in Fign. 3 und 4 in das Armaturenbrett 300 des Fahrzeugs 100 eingebaut. Bei anderen Ausführungsbeispielen ist eine Mehrzahl von Lautsprechern 200 an einer Tür 400, einer Säule 410 oder einer Heckablage des Fahrzeugs 100 angebracht.

Der durch ein oder mehrere Audiosignale erzeugte Schall kann nun über eine Gestenerkennung auf einen dafür vorgesehenen Bereich gerichtet, gebündelt oder orientiert werden. Als anschaulicher Vergleich kann hierzu beispielsweise ein Belüftungssystem in einem Fahrzeug betrachtet werden. Bei einem Belüftungssystem kann es möglich sein, einen Luftstrom zu lenken oder den Luftaustritt zu regulieren. In einer ersten Variante kann die Funktionsweise die in Fign. 3 und 4 gezeigte Lautsprechermatrix 200 bezüglich der Ausrichtung eines beschallten Bereichs, der Bündelung oder der Lautstärke analog zu der Funktionsweise einem verstellbaren Belüfter betrachtet werden.

Bei der ersten Variante sind hierzu die Lautsprecher 160 räumlich verstellbar gelagert. Hierzu kann ein mechanisches System vorhanden sein, bei dem sich die Lautsprecher 160 physisch bewegen können, z.B. mithilfe von Aktuatoren. Einem Benutzer kann es nun beispielsweise möglich sein, durch eine Wischbewegung einer Hand ein Verschieben des Schallbereichs von einer Anfangs- zu einer Endposition zu erreichen. Dies kann technisch derart realisiert sein, dass zu Beginn der Handbewegung zunächst alle Lautsprecher 160 der Matrix 200 auf die Hand ausgerichtet sind. Wird die Hand bewegt, können die Lautsprecher 160 derart in ihrer Ausrichtung verstellt werden, dass die Lautsprecher 160 bis zu einem Endpunkt der Handbewegung auf die Hand ausgerichtet bleiben. Zu einem Definieren des Anfangs- oder Endpunktes der Bewegung kann beispielsweise ein Verweilen der Hand an einem entsprechenden Punkt für mindestens eine, zwei oder auch drei Sekunden erfolgen. Dadurch kann durch die Geste des Benutzers ein zu beschallender Bereich vorgegeben werden. Fig. 3 zeigt die Lautsprechermatrix 200, bei der die Lautsprecher 160 auf einen durch einen Pfeil 310 markierten Punkt ausgerichtet sind. In dem in Fig. 4 gezeigten Ausführungsbeispiel befinden sich die Lautsprecher 160 der Matrix 200 in einer Ruheposition, derart, dass die Stirnflächen der Lautsprecher parallel zueinander ausgerichtet sind.

Außerdem kann es z.B. möglich sein, durch Annähern oder Entfernen der Hand an oder von einer Teilmenge von Lautsprechern 160 ein Intensivieren oder Dimmen des emittierten Schalls zu erreichen. Ferner kann die Möglichkeit bestehen, beispielsweise mittels einer Zweihandgeste den Schallbereich in zwei Schallbereiche aufzuteilen, sodass eine Teilmenge von Lautsprechern 160 einen vorgegebenen Bereich beschallt, und eine weitere Teilmenge von Lautsprechern 160 einen weiteren Bereich. Ferner sind bei manchen Ausführungsbeispielen eine erste Teilmenge von Lautsprechern einer ersten Matrix, und eine zweite Teilmenge von Lautsprechern einer zweiten Matrix zugeordnet. Die erste Matrix kann sich z.B. in dem Armaturenbrett des Fahrzeugs 100, und die zweite Matrix in einer hinteren Tür des Fahrzeugs 100 befinden. Der Schallbereich kann so beispielsweise von einem Beifahrer an einen hinteren Passagier "weitergegeben" werden.

Entsprechend kann die Möglichkeit bestehen, zwei Schallbereiche zu einem Schallbereich zusammenzuführen. Eine solche Zweihandgeste kann z.B. ein Bewegen der Hände voneinander weg oder aufeinander zu umfassen. Auch kann z.B. mittels Gestenbedienung der Schallbereich individuell gebündelt oder beliebig verkleinert oder vergrößert werden.

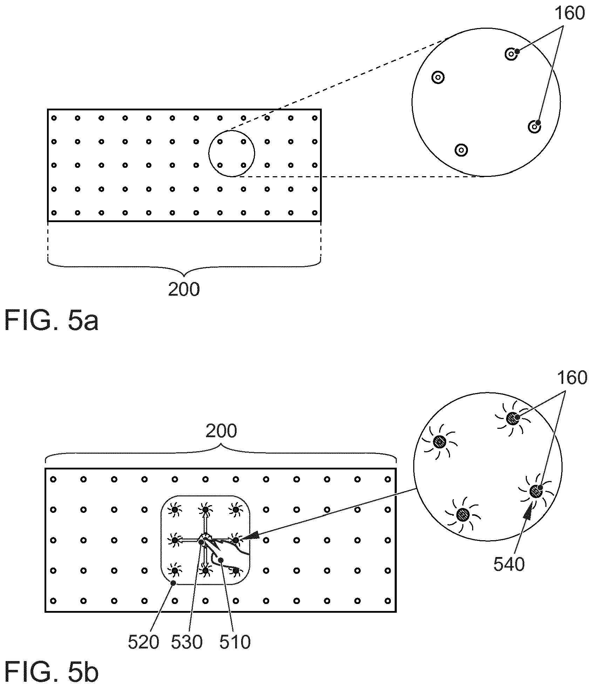

Bei einer zweiten Variante, welche in Fign. 5a und 5b gezeigt ist, sind mehrere Lautsprecher 160, aufgrund ihrer im Vergleich zu konventionellen Lautsprechern geringeren Größe auch "Mikrolautsprecher" genannt, statisch in einer Matrix 200 angeordnet. Der Schallbereich kann hierbei im Ganzen verschoben oder positioniert werden. Die Lautsprecher 160 selbst sind unbeweglich, jedoch kann der Schallbereich auf den Lautsprechern verteilt werden. Mit anderen Worten kann eine Austrittsfläche des Schalls reguliert werden. Eine Auswahl einer Teilmenge von Lautsprechern 520 aus der Matrix 200 kann durch eine vordefinierte Geste, beispielsweise eine Annäherung eines Fingers 510, stattfinden. Nähert sich der Finger 510 an einen benutzerdefinierten Lautsprecher 530 an, kann z.B. eine Teilmenge 520 solcher Lautsprecher aktiviert werden, die dem benutzerdefinierten Lautsprecher 530 benachbart sind, oder, mit anderen Worten die nächsten Nachbarn des benutzerdefinierten Lautsprechers 530 und dieser selbst. Bei einem anderen Ausführungsbeispiel kann die Teilmenge 520 auch zusätzlich die übernächsten oder überübernächsten Nachbarn umfassen. Lautsprecher, die von der Teilmenge 520 umfasst sind, werden dadurch aktiviert und geben das Audiosignal wieder. Dagegen werden Lautsprecher, die nicht von der Teilmenge 520 umfasst sind, deaktiviert, oder stumm geschaltet. Dies kann bei einigen Ausführungsbeispielen berührungsfrei geschehen. Die Lautsprechermatrix 200 kann hierzu auch hinter einer Abdeckung, die z.B. aus transparentem Kunststoff gefertigt sein kann, befindlich sein. Die ausgewählte Teilmenge 520 kann weiterhin durch Gesten, wie bereits bei der ersten Variante beschrieben, verschoben oder positioniert werden.

Bei einigen Ausführungsbeispielen wird ein Lautsprecher 160 in Folge des Aktivierens durch eine Beleuchtung 540 hervorgehoben. In Fig. 5a ist die gesamte Matrix 200 deaktiviert. In Fig. 5b ist die Teilmenge 520 durch Beleuchtung 540 der von ihr umfassten Lautsprecher hervorgehoben. Die aktivierten Lautsprecher können so während der Gestensteuerung visualisiert und deren Auswahl sichtbar gemacht werden. Die Beleuchtung 540 kann z.B. durch eine aus Sicht des Benutzers hinter dem Lautsprecher 160 gelegene Lichtquelle erfolgen, wodurch ein glühender Effekt erzielt werden kann, der auch als "Glow" bezeichnet wird. Dieses Konzept kann auch bei der ersten Variante Anwendung finden.

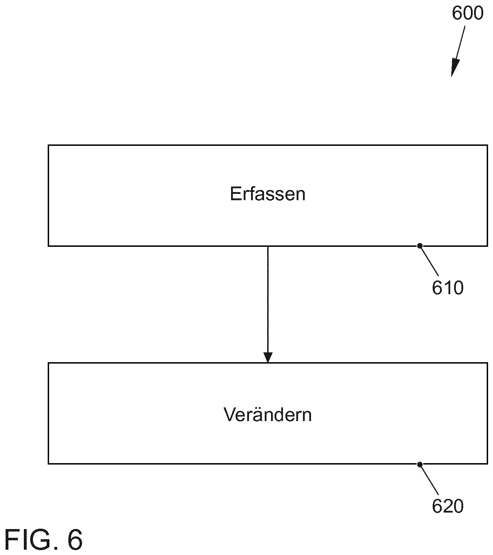

Fig. 6 zeigt ein Verfahren 600 zur Bescchallung eines Innenraums eines Fahrzeugs gemäß einem Ausführungsbeispiel. Das Verfahren 600 umfasst ein Erfassen 610 einer Geste eines Benutzers durch eine Sensoreinrichtung. Zudem umfasst das Verfahren 600 ein Verändern 620 einer Charakteristik eines von einer zumindest einen Lautsprecher umfassenden Lautsprecheranordnung emittierten Audiosignals abhängig von dem Signal.

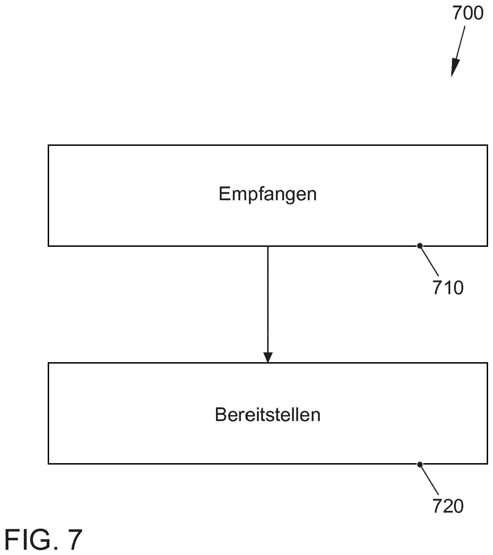

Fig. 7 zeigt ein Flussdiagramm zum Ablauf eines Programms 700 mit einem Programmcode zum Durchführen des folgenden Verfahrens, wenn der Programmcode auf einem Computer, einem Prozessor oder einer programmierbaren Hardwarekomponente, wie z.B. einer applikationsspezifischen integrierten Schaltung (ASIC), ausgeführt wird. Das Verfahren umfasst ein Empfangen 710 eines eine Geste eines Benutzers charakterisierenden Signals. Das Verfahren umfasst zudem ein Bereitstellen 720 eines Steuersignals, welches das Verändern einer Charakteristik eines von einer zumindest einen Lautsprecher umfassenden Lautsprecheranordnung emittierten Audiosignals in einem Fahrzeug, basierend auf dem Signal, bewirkt.

Bei Ausführungsbeispielen kann beispielsweise der Schallbereich von einem Hauptmodul (eine Lautsprechermatrix im Frontbereich eines Fahrzeugs) zu einem anderen Modul im hinteren Fahrzeugbereich über Gestensteuerung verschoben werden. Der Schall kann auch in eine andere Richtung gelenkt oder gebündelt, oder eine Austrittsfläche des Schalls reguliert werden. Ferner kann der Schall gezielt auf einen bestimmten Bereich oder eine bestimmte Person konzentriert werden, und so möglicherweise. eine optimale Beschallung erreicht, oder der Schall in einem Bereich des Fahrzeuginnenraums komplett stumm geschaltet werden.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hineinschreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 100: Fahrzeug
- 110: Vorrichtung
- 120: Sensoreinrichtung
- 130: Geste
- 140: Benutzer
- 150: Signal
- 160: Lautsprecher
- 165: Lautsprecheranordnung
- 170: Audiosignal
- 180: Prozessor
- 190: Steuersignal
- 200: Lautsprechermatrix
- 210: Stirnfläche
- 220: Seitenlänge
- 230: Dicke
- 300: Armaturenbrett
- 310: Pfeil
- 400: Tür
- 410: Säule
- 510: Finger
- 520: Teilmenge von Lautsprechern
- 530: Benutzerdefinierter Lautsprecher
- 540: Beleuchtung
- 600: Verfahren
- 610: Erfassen
- 620: Verändern
- 700: Programm
- 710: Empfangen
- 720: Bereitstellen

## Patentansprüche

1. Fahrzeug (100) mit einer Vorrichtung (110) zur Beschallung eines Innenraums des Fahrzeugs (100), umfassend:
eine Sensoreinrichtung (120), welche dazu ausgebildet ist eine Geste (130) eines Benutzers (140) zu erfassen und ein die Geste (130) charakterisierendes Signal (150) bereitzustellen; und
einer zumindest einen Lautsprecher (160) umfassenden Lautsprecheranordnung (165), welche dazu ausgebildet ist, abhängig von dem Signal (150) eine Charakteristik eines von der Lautsprecheranordnung (165) emittierten Audiosignals (170) zu verändern, wobei die Charakteristik eine Raumrichtung ist, in die ein Maximum einer Intensität des Audiosignals (170) emittiert wird,
**dadurch gekennzeichnet, dass** der Lautsprecher (160) ausgebildet ist, um ansprechend auf das Signal (150) eine räumliche Ausrichtung des Lautsprechers (160) zu verändern.

2. Fahrzeug (100) gemäß Anspruch 1, wobei die Vorrichtung (110) einen Prozessor (180) umfasst, welcher dazu ausgebildet ist, das Signal (150) zu empfangen, und basierend auf dem Signal (150) ein Steuersignal (190) mit Informationen zum Verändern der Charakteristik des von der Lautsprecheranordnung (165) emittierten Audiosignals (170) an die Lautsprecheranordnung (165) bereitzustellen.

3. Fahrzeug (100) gemäß einem der vorangegangenen Ansprüche, wobei die Charakteristik zumindest eine Eigenschaft der Eigenschaften Lautstärke und Phasenlage des Audiosignals (170) ist.

4. Fahrzeug (100) gemäß einem der vorangegangenen Ansprüche, wobei der Lautsprecher (160) in Folge eines Aktivierens des Lautsprechers (160) mittels einer Beleuchtung (540) hervorgehoben wird.

5. Fahrzeug (100) gemäß einem der vorangegangenen Ansprüche, wobei die Lautsprecheranordnung (165) in einem Armaturenbrett (300) des Fahrzeugs (100) angeordnet ist.

6. Fahrzeug (100) gemäß einem der vorangegangenen Ansprüche, wobei das Signal (150) eine Handbewegung des Benutzers (140) charakterisiert.

7. Fahrzeug (100) gemäß Anspruch 6, wobei die Charakteristik des Audiosignals (170) derart verändert wird, dass ein durch die Handbewegung des Benutzers (130) vorgegebener Bereich von dem Lautsprecher (160) beschallt wird.

8. Fahrzeug (100) gemäß einem der vorangegangenen Ansprüche, wobei die Vorrichtung (110) eine Mehrzahl von Lautsprechern (200) umfasst.

9. Fahrzeug (100) gemäß Anspruch 8, wobei die Charakteristik derart verändert wird, dass von einer ersten Teilmenge der Mehrzahl von Lautsprechern (200) ein durch die Handbewegung des Benutzers (130) vorgegebener Bereich beschallt wird, und/oder von einer zweiten Teilmenge der Mehrzahl von Lautsprechern (200) ein durch die Handbewegung des Benutzers (130) vorgegebener weiterer Bereich beschallt wird.

10. Fahrzeug (100) gemäß Anspruch 9, wobei die erste Teilmenge von Lautsprechern einer ersten Anordnung einander benachbarter Lautsprecher (160) zugeordnet ist, und die zweite Teilmenge von Lautsprechern einer zweiten Anordnung einander benachbarter Lautsprecher (160) zugeordnet ist.

11. Verfahren (600) zur Beschallung eines Innenraums eines Fahrzeugs, mit:
Erfassen (610) einer Geste eines Benutzers durch eine Sensoreinrichtung;
Bereitstellen eines die Geste charakterisierenden Signals; und
Verändern (620) einer Charakteristik eines von einer zumindest einen Lautsprecher umfassenden Lautsprecheranordnung emittierten Audiosignals abhängig von dem Signal, wobei die Charakteristik eine Raumrichtung ist, in die ein Maximum einer Intensität des Audiosignals emittiert wird,
**dadurch gekennzeichnet, dass** das Verändern (620) der Charakteristik ein Verändern einer räumlichen Ausrichtung des Lautsprechers ansprechend auf das Signal umfasst.

12. Programm (700) mit einem Programmcode zum Durchführen des folgenden Verfahrens, wenn der Programmcode auf einem Computer, einem Prozessor oder einer programmierbaren Hardwarekomponente ausgeführt wird:
Empfangen (710) eines eine Geste eines Benutzers charakterisierenden Signals; und
Bereitstellen (720) eines Steuersignals basierend auf dem Signal, welches das Verändern einer Charakteristik eines von einer zumindest einen Lautsprecher umfassenden Lautsprecheranordnung emittierten Audiosignals in einem Fahrzeug bewirkt, wobei die Charakteristik eine Raumrichtung ist, in die ein Maximum einer Intensität des Audiosignals emittiert wird,
**dadurch gekennzeichnet, dass** das Steuersignal ein Verändern einer räumlichen Ausrichtung des Lautsprechers bewirkt.

## Claims

1. Vehicle (100) having an apparatus (110) for transmitting sound to an interior of the vehicle (100), comprising:
a sensor device (120) that is configured to sense a gesture (130) of a user (140) and to provide a signal (150) characterizing the gesture (130); and
a loudspeaker arrangement (165), comprising at least one loudspeaker (160), that is configured to take the signal (150) as a basis for altering a characteristic of an audio signal (170) emitted by a loudspeaker arrangement (165), wherein the characteristic is a spatial direction in which a maximum of an intensity of the audio signal (170) is emitted,
**characterized in that** the loudspeaker (160) is configured to alter a spatial orientation of the loudspeaker (160) in response to the signal (150).

2. Vehicle (100) according to Claim 1, wherein the apparatus (110) comprises a processor (180) that is configured to receive the signal (150), and to take the signal (150) as a basis for providing a control signal (190) having information for altering the characteristic of the audio signal (170) emitted by the loudspeaker arrangement (165) to the loudspeaker arrangement (165).

3. Vehicle (100) according to one of the preceding claims, wherein the characteristic is at least one property from the properties volume and phase of the audio signal (170).

4. Vehicle (100) according to one of the preceding claims, wherein the loudspeaker (160) is highlighted by means of lighting (540) as a result of activation of the loudspeaker (160).

5. Vehicle (100) according to one of the preceding claims, wherein the loudspeaker arrangement (165) is arranged in a dashboard (300) of the vehicle (100).

6. Vehicle (100) according to one of the preceding claims, wherein the signal (150) characterizes a hand movement of the user (140).

7. Vehicle (100) according to Claim 6, wherein the characteristic of the audio signal (170) is altered such that an area prescribed by the hand movement of the user (130) has sound transmitted to it by the loudspeaker (160).

8. Vehicle (100) according to one of the preceding claims, wherein the apparatus (110) comprises a plurality of loudspeakers (200).

9. Vehicle (100) according to Claim 8, wherein the characteristic is altered such that a first subset of the plurality of loudspeakers (200) transmits sound to an area prescribed by the hand movement of the user (130), and/or a second subset of the plurality of loudspeakers (200) transmits sound to a further area prescribed by the hand movement of the user (130).

10. Vehicle (100) according to Claim 9, wherein the first subset of loudspeakers is associated with a first arrangement of mutually adjacent loudspeakers (160), and a second subset of loudspeakers is associated with a second arrangement of mutually adjacent loudspeakers (160).

11. Method (600) for transmitting sound to an interior of a vehicle, involving:
sensing (610) a gesture of a user in a sensor device;
providing a signal characterizing the gesture;
altering (620) a characteristic of an audio signal emitted by a loudspeaker arrangement comprising at least one loudspeaker on the basis of the signal, wherein the characteristic is a spatial direction in which a maximum of an intensity of the audio signal is emitted,
**characterized in that** the altering (620) of the characteristic comprises altering a spatial orientation of the loudspeaker in response to the signal.

12. Program (700) having a program code for performing the following method when the program code is executed on a computer, a processor or a programmable hardware component:
receiving (710) a signal characterizing a gesture of a user; and
providing (720) a control signal based on the signal that causes the altering of a characteristic of an audio signal emitted by a loudspeaker arrangement comprising at least one loudspeaker in a vehicle, wherein the characteristic is a spatial direction in which a maximum of an intensity of the audio signal is emitted;
**characterized in that** the control signal causes a spatial orientation of the loudspeaker to be altered.

## Revendications

1. Véhicule (100) muni d'un dispositif (110) servant à la sonorisation d'un habitacle du véhicule (100) comprenant :
un dispositif de détection (120) conçu pour détecter un geste (130) d'un utilisateur (140) et pour fournir un signal (150) caractérisant le geste (130) ; et
un agencement de haut-parleurs (165) comprenant au moins un haut-parleur (160), qui est conçu pour modifier, en fonction du signal (150), une caractéristique d'un signal audio (170) émis par l'agencement de haut-parleurs (165),
dans lequel la caractéristique est une direction spatiale dans laquelle un maximum d'une intensité du signal audio (170) est émis,
**caractérisé en ce que** le haut-parleur (160) est conçu pour modifier une orientation spatiale du haut-parleur (160) en réponse au signal (150).

2. Véhicule (100) selon la revendication 1, dans lequel le dispositif (110) comprend un processeur (180) qui est conçu pour recevoir le signal (150), et pour fournir à l'agencement de haut-parleurs (165), sur la base du signal (150), un signal de commande (190) contenant des informations destinées à faire varier la caractéristique du signal audio (170) émis par l'agencement de haut-parleurs (165).

3. Véhicule (100) selon l'une des revendications précédentes, dans lequel la caractéristique est au moins une propriété parmi les propriétés consistant en le volume et la position de phase du signal audio (170).

4. Véhicule (100) selon l'une des revendications précédentes, dans lequel le haut-parleur (160) est mis en évidence au moyen d'un éclairage (540) par suite d'une activation du haut-parleur (160).

5. Véhicule (100) selon l'une des revendications précédentes, dans lequel l'agencement de haut-parleurs (165) est disposé dans un tableau de bord (300) du véhicule (100).

6. Véhicule (100) selon l'une des revendications précédentes, dans lequel le signal (150) caractérise un mouvement de main de l'utilisateur (140).

7. Véhicule (100) selon la revendication 6, dans lequel la caractéristique du signal audio (170) est modifiée de manière à ce qu'une zone prédéterminée par le mouvement de la main de l'utilisateur (130) soit sonorisée par le haut-parleur (160).

8. Véhicule (100) selon l'une des revendications précédentes, dans lequel ledit dispositif (110) comprend une pluralité de haut-parleurs (200).

9. Véhicule (100) selon la revendication 8, dans lequel la caractéristique est modifiée de manière à ce qu'une zone prédéterminée par le mouvement de la main de l'utilisateur (130) soit sonorisée par un premier sous-ensemble de la pluralité de haut-parleurs (200) et/ou qu'une autre zone prédéterminée par le mouvement de la main de l'utilisateur (130) soit sonorisée par un deuxième sous-ensemble de la pluralité de haut-parleurs (200).

10. Véhicule (100) selon la revendication 9, dans lequel le premier sous-ensemble de haut-parleurs est associé à un premier agencement de haut-parleurs (160) adjacents les uns aux autres, et dans lequel le deuxième sous-ensemble de haut-parleurs est associé à un deuxième agencement de haut-parleurs (160) adjacents les uns aux autres.

11. Procédé (600) pour la sonorisation de l'habitacle d'un véhicule, comprenant :
la détection (610) d'un geste de l'utilisateur au moyen d'un capteur ;
la fourniture d'un signal caractérisant le geste ; et
la modification (620) d'une caractéristique d'un signal audio émis par un agencement de haut-parleurs comprenant au moins un haut-parleur en fonction du signal, dans lequel la caractéristique est une direction spatiale dans laquelle un maximum d'une intensité du signal audio est émis,
**caractérisé en ce que** la modification (620) de la caractéristique comprend une modification de l'orientation spatiale du haut-parleur en réponse au signal.

12. Programme (700) comportant un code de programme destiné à mettre en oeuvre le procédé suivant lorsque le code de programme est exécuté sur un ordinateur, un processeur ou un composant matériel programmable :
recevoir (710) un signal caractérisant le geste de l'utilisateur ; et
fournir (720) un signal de commande sur la base du signal, lequel signal provoque la modification d'une caractéristique d'un signal audio émis par un agencement de haut-parleurs comprenant au moins un haut-parleur dans un véhicule, dans lequel la caractéristique est une direction spatiale dans laquelle une intensité maximale d'un signal audio est émise,
**caractérisé en ce que** le signal de commande provoque une modification d'une orientation spatiale du haut-parleur.
